# EUROPEAN PATENT SPECIFICATION

(11) **EP 3 220 833 B1**
(45) Date of publication and mention of the grant of the patent: **12.02.2020**
(21) Application number: 15861257.2
(22) Date of filing: 19.11.2015
(51) Int. Cl.: A61B 10/00, B01L 3/00, B01L 9/06, G01N 1/02, G01N 35/00

(54) **SPECIMEN COLLECTION DEVICE WITH RFID CAP AND MEANS FOR LOCKING INTO A TEST BLOCK**
PROBENAHMEVORRICHTUNG MIT RFID-KAPPE UND VORRICHTUNG ZUR VERRIEGELUNG IN EINEM TESTBLOCK
DISPOSITIF DE COLLECTE D'ÉCHANTILLONS AVEC CAPUCHON RFID ET DISPOSITIFS DE VERROUILLAGE DANS UN BLOC DE TEST

(30) Priority: 19.11.2014 US 201462081772 P
(43) Date of publication of application: 27.09.2017
(73) Proprietor: Laboratory Corporation of America Holdings, Burlington, North Carolina 27215 (US)
(72) Inventor: SANGHA, Jangbir, Overland Park, Kansas 66209 (US)
(74) Representative: Latscha Schöllhorn Partner AG
(86) International application number: PCT/US2015/061656
(87) International publication number: WO 2016/081755

(56) References cited:
- WO-A1-2011/106784
- WO-A1-2014/135890
- WO-A1-2014/135890
- DE-U1-202012 102 776
- US-A- 5 268 148
- US-A1- 2004 008 123
- US-A1- 2007 255 175
- US-A1- 2008 035 642
- US-A1- 2011 004 122

## Description

### FIELD OF THE INVENTION

The present disclosure relates to a specimen collection device capable of automated specimen manipulation and of maintaining chain of custody of a specimen collected thereon. The device is securely associated with the specimen collection absorbent and subject identifying information to preserve chain of custody. The device is also compatible with automated specimen handling and analysis equipment and allows for transferring and/or extracting a specimen collected on the specimen collection absorbent from clinical or environmental samples without human intervention.

### BACKGROUND OF THE INVENTION

Increasingly in law enforcement it is necessary to collect biological samples as evidence of a crime or for use as identifying information of a particular human as is the case of DNA collection from suspects. In the collection of biological specimens, it is necessary to associate information about the subject with the specimen and the subject associated with the specimen at the time of collection as there is no manner for identifying a biological specimen by simple inspection. Therefore, a useful form of evidence collection device for use with biological specimens will contain, at least, a means for specimen identification. Such specimen identification means may further comprise suspect information portion for recording subject information data thereon.

The use of biological specimens as evidence further requires that the biological specimen be securely associated with the identifying information so as to assure that after collection of the specimen, the collection paper or absorbent cannot be intentionally or inadvertently switched to a different collection paper. At a minimum, a proper evidence collection device or holder should easily and clearly show that tampering was attempted either by damage to delicate indicia on the device or by overt damage to a strongly secured device.

The foregoing issues relate, generally, to a process referred to as evidence "chain of custody." "Chain of custody" encompasses the procedures and documentation used to maintain and demonstrate the chronological history of the evidence. In biological samples, the principles of evidence or sample identification involved in maintaining proper "chain of custody" are especially critical as a fluid or cellular biological sample, once collected onto an absorbent presents no distinguishing characteristics. This lack of visual characteristics foils any attempt to properly identify such a biological fluid or cellular sample once it has become separated from its identifying information.

Another problem or issue presented in the analysis of biological specimens is the need to extract or transfer the collected sample from the original collection absorbent and onto an alternate medium to permit analysis or testing of the specimen using the analysis equipment that is available in the selected laboratory. Using existing systems and methods, human intervention is necessary to extract or transfer the collected sample from the original collection absorbent. Manual transfer or extraction of the collected specimen from the original collection absorbent introduces the possibility of sample contamination as well as operator exposure to sample, reagents, and process waste. In addition, it is often necessary to separate the collection absorbent from its originally obtained identifying information that is directly associated with the original collection absorbent for further sample processing. This separation of specimen from identifying information can lead to mistakes in associating the specimen with the correct subject or suspect or can lead to the "chain of custody" being open to question in court and a failure of proof of a crime. Sample misidentification is a major source of error both in laboratory analysis and in substantiating criminal evidence.

Accordingly, a need exists for a specimen collection device that is securely associated with the specimen collection absorbent and specimen identifying information, while providing compatibility with automated specimen handling and analysis equipment capable of transferring and/or extracting a collected specimen from clinical or environmental samples (or from environmental samples collected manually) without human intervention. Further, it would be beneficial if such device was tamper proof or tamper evident. DE 20 2012 102776 U1 to Dieter Schmiedl ("Schmiedl") generally describes a collection device for specimens, in particular microbiological, virological, genetic, medical, veterinary, and forensic samples. In addition to being suited for the collection of such samples, the devices of Schmiedl further comprise a lancet to allow for the collection of capillary blood samples, which may be desirable in certain settings, e.g., in veterinary medicine where often neither oral mucosa smears nor venous blood are readily available. Furthermore, the devices of Schmiedl in some instances incorporate a means for sample identification, generally wherein a code used for sample identification may be positioned on a stem or next to a swabbing tip of the collection device. US 2011/004122 A1 to Jangbir Sangha generally describes apparatus and methods for the collection, transport, and analysis of specimens, in particular for laboratory and/or forensic purposes, i.e., a sample collection device and methods of using said device. Furthermore, Sangha generally describes a device for containerized, low pressure sample collection, which in some instances incorporates a vacuum connection and a vacuum source for said low pressure sample collection. In some instances, the sample collection device comprises a swab, which further comprises swab identification indicia marked on the shaft of the swab, and further in some instances comprises container identification indicia matching said swab identification indicia.

### SUMMARY OF THE INVENTION

A specimen collection device capable of maintaining chain of custody and automated specimen manipulation is provided. The specimen collection device according to the invention is described in claim 1. The instant specimen collection device maintains secure association with the specimen and specimen identifying information, and provides compatibility with automated specimen handling and analysis equipment capable of transferring and/or extracting a collected specimen from clinical or environmental samples without human intervention.

The specimen collection device comprises a collector holder tube for insertion into a receiver void of a test block, and a specimen collector for insertion within the collector tube holder. The specimen collector comprises a closure having an insert portion and a cap portion, and a shaft having a first end coupled to the insert portion of the closure and extending therefrom. The shaft terminates at a second end that has a collection swab coupled thereto. A co-axial tube contains at least a portion of the shaft. The co-axial tube may be coupled to the insert portion of the closure at one end. The specimen collector additionally comprises a chamber within the cap portion of the closure within which is inserted a radio-frequency identification (RFID) tag in order to maintain the chain of custody of a collected specimen.

At least one locking flange extends from the base of the cap portion and is configured to engage a locking receiver of the test block.

Various objects and advantages of this device will become apparent from the following description taken in conjunction with the accompanying drawings wherein, by way of illustration, certain embodiments of this disclosure are set forth.

### BRIEF DESCRIPTION OF THE DRAWINGS

Preferred embodiments of the invention, illustrative of the best modes in which the applicant has contemplated applying the principles, are set forth in the following description and are shown in the drawings and are particularly and distinctly pointed out and set forth in the appended claims.
Fig. 1 is a cross-sectional front view of a first embodiment of a specimen collection device **16** inserted into a receiver void **12** of a test block **10,** the specimen collection device **16** having a closure **18** which comprises a chamber **42** in the cap portion **30** for securing an RFID tag **44.**
Fig. 2 is a cross-sectional front view of an unclaimed specimen collection device **16** depicting a closure **18** having a solid cap portion **50.**
Fig. 3 side perspective view of the closure **18** for the specimen collection device having the lid removed to depict the inner chamber **42** positioned within the cap portion to house an RFID tag, as well as locking flanges **54** for securement of the device to a test block.
Fig. 4 is a top perspective view of an embodiment of the test block depicting a sliding lock engagement track **56** for attachment to the closure of the specimen collection device.
Fig. 5 is a top perspective view of the lid **46** for use with an embodiment of the specimen collection device **16.**
Fig. 6 is a cross-sectional perspective view of the collector holder tube **14.**

### DETAILED DESCRIPTION

The purpose of the present invention is to meet collection requirements that allow blood specimen collection or body fluid collection or DNA collection to qualify for secure evidence handling and for chain of custody proof requirements in law enforcement. In particular, the present invention is directed to a specimen collector device that maintains secure association with the specimen or sample and avoids the need for any transfer of the specimen or require the transfer of a bar code or other identifying material from the specimen collector onto the sample device holder.

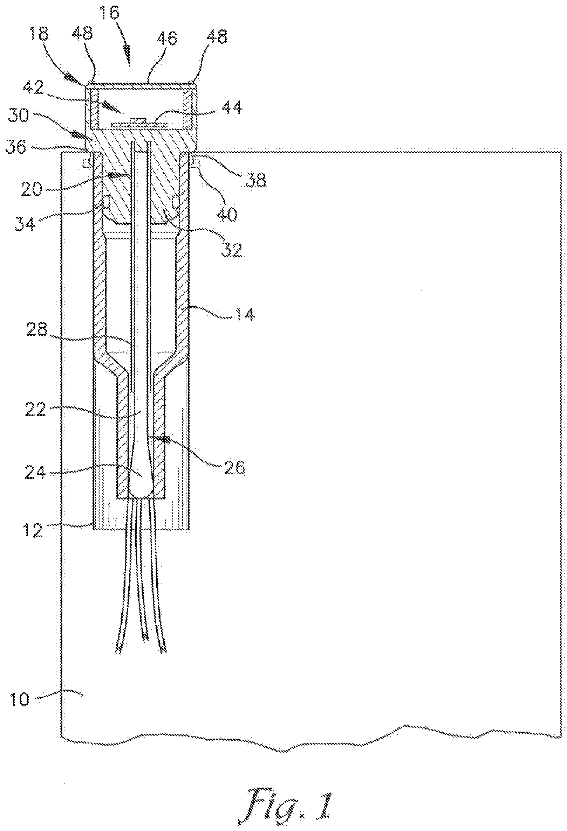

Referring now to Fig. 1, a first embodiment of a specimen collection device **16** is shown. Fig. 1 illustrates a cross-sectional view of the specimen collection device **16** inserted into a receiver void **12** of a test block **10,** the specimen collection device comprising a specimen collector **22** and a collector holder tube **14,** the specimen collector depicted as being inserted into the collector holder tube. The specimen collector **22** is comprised of a closure **18** having a shaft **28** connected thereto and the shaft extending from one end of the closure having a collection swab **24** attached to a second end **26** of the shaft. A co-axial tube **20** is positioned around the shaft **28.**

In the embodiment of Fig. 1, the closure **18** is comprised of a cap portion **30** and an insert portion **32** for insertion of the specimen collector **22** into the collector holder tube **14.** The insert portion **32** is provided with a gasket, such as an O-ring **34** so that it is sufficiently spaced from the open end **36** of the collector holder tube **14** to prevent the closure **18** from pivoting within the collector holder tube **14.** By biasing the closure **18** towards a non-pivoted alignment, the O-ring **34** keeps the swab **24** from being forced against either side of the collector holder tube **14.** The closure **18** is further provided with the cap portion **30** in order to seal the open end **36** of the collector holder tube **14.** The cap portion **30** is sufficiently wide to permit the cap portion to contact the test block so that locking flanges **38** extending from the cap portion **36** may be inserted into lock receivers **40** located within the test block **10.** The purpose of the locking flanges and the lock receivers is to allow the closure **18** to secure the specimen collection device **16** to the test block **10** so that, as internal pressure is developed within the collector holder tube, that pressure does not expel the closure from the device.

The closure **18** of the embodiment of Fig. 1 also is provided with a void or chamber **42** within the cap portion **30.** Identifying information, namely a radio frequency identification chip or tag **44** (RFID), is inserted into the chamber within the cap portion **30** and enclosed therein by the attachment of a lid **46** onto the cap portion **30.** The RFID tag or chip could be a passive or active chip and would have a unique identification number associated therewith to provide a unique identifier to each individual specimen collector. The lid **46** is securely attached to the cap portion **30** such that only by the use destructive measures could the lid be removed. This secure attachment is intended to prevent unobserved tampering with the RFID tag **44** housed inside the cap portion. In the embodiment of Fig. 1 a sonic weld **48** may be used to attach the lid **46** to the cap portion **30.** In some embodiments, the cap portion **30** is configured as a handle, but without being solid therein.

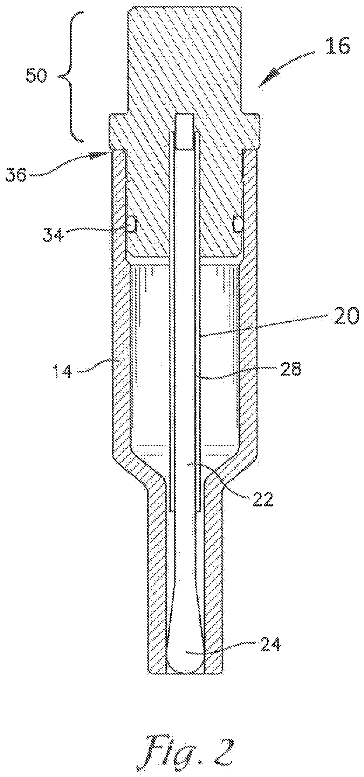

Referring now to Fig. 2, an unclaimed specimen collection device **16** is presented. Specifically, Fig. 2 depicts the closure of the device having a solid cap portion **50** rather than a void or chamber for holding identifying information, such as an RFID tag. The solid cap portion **50** is inserted into the open end **36** of the collector holder tube **14** such that the it operates as an handle for the specimen collector **22** extending from the end of the insert portion **30** of the closure. It may be seen in Fig. 2 that the O-ring **34** is positioned on the insert portion **30** and that the co-axial tube **20** surrounds the shaft **28** of the specimen collector **22.**

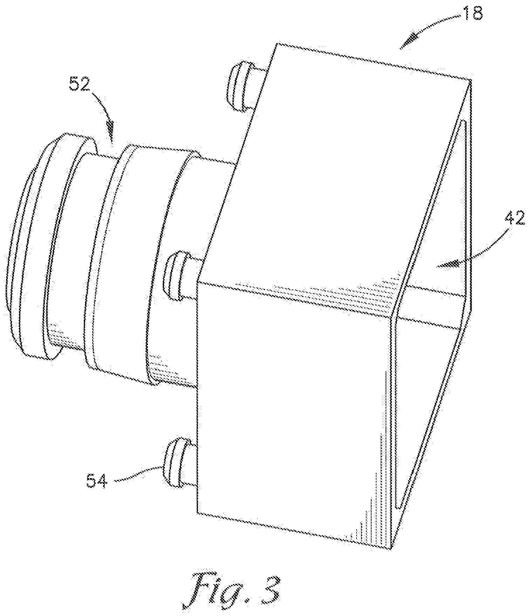

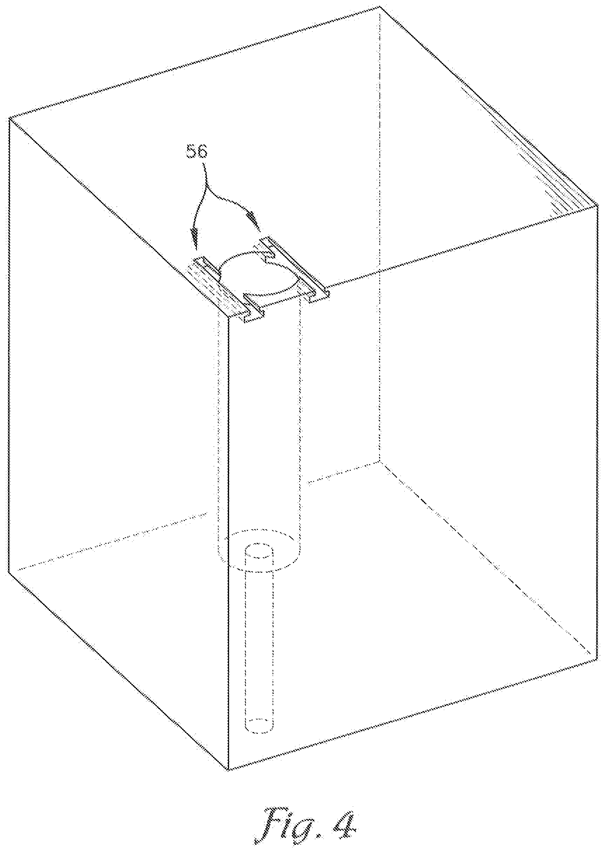

Referring now to Fig. 3, the closure **18** of Fig. 1 is shown with the lid **46** having been removed to illustrate the chamber **42** in which the RFID tag may be housed. The O-ring has been removed and the groove **52** into which the O-ring is fitted is shown. Also in Fig. 3, an embodiment of a locking flange **54** is shown that may be fitted into a sliding track mechanism **56** of a test block **10,** as is shown in Fig. 4. It will be appreciated that the sliding lock engagement track **56** of Fig. 4 can provide either a releasable lock or a non-releasable lock with respect to the attachment of the closure to the test block.

Referring again to Fig. 1 and Fig. 3, the locking flanges **54** of the embodiment of Fig. 3 are shown to extend downwardly from the cap portion **30** of the closure so that they may engage with a lock receiver **40** on the test block **10,** as shown in Fig. 1. The lock receiver **40** of Fig. 1 may be a void in which the flange of Fig. 3 is captured by frictional fit or the lock receiver 40 may be of a mechanical engagement type as is shown in Fig. 4.

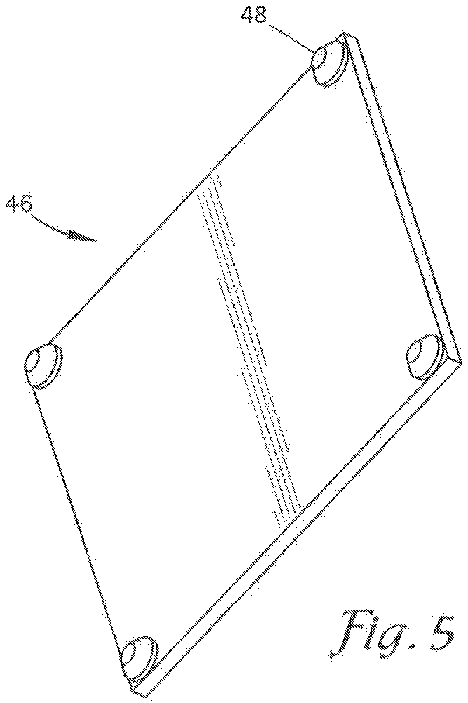

Referring now to Fig. 5, the lid **46** for attachment to the cap portion **30** illustrated in Fig. 1 is shown. The lid **46** sealingly engages the cap portion adjacent the chamber. The seal is permanent and may be by any means known in the art, including adhesive, sonic weld **48,** or mechanical means, such as a locking flange and lock receiver coupling. The lid is permanently sealed to the cap portion **30** in order to prevent unauthorized access to or tampering with the RFID tag **44** housed within the chamber **42** of the cap portion.

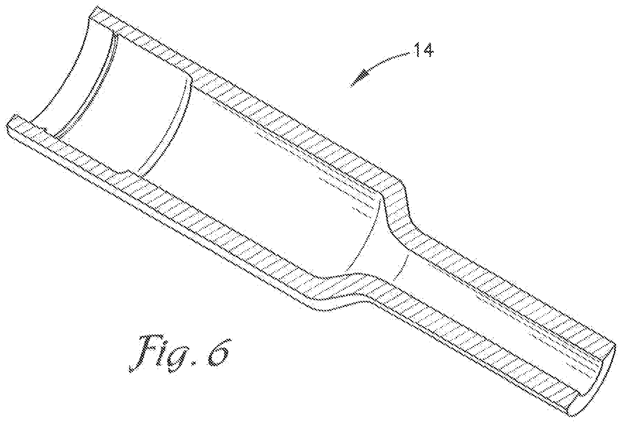

Fig. 6 shows a cross-sectional view of the collector holder tube **14** of the specimen collection device. It will be appreciated that the narrow channel wherein the collector swab **24** is disposed (as is shown in Fig. 1) is provided to limit the area in which reagents are able to flow as the reagents are injected into the test block and forced upwardly into the collector swab to dissolve any biological specimen that is on the swab. It will be appreciated that when the collector holder tube **14** is being used apart from the test block **10** that a bottom end cover or cap may be provided to close the narrow end of the collector holder tube **14** near the swab to avoid contamination of the swab and any specimen collected thereon.

## Claims

1. A specimen collection device comprising:
a test block (10) comprising a locking receiver void (12);
a collector holder tube (14) for insertion into the locking receiver void (12) of the test block (10); and
a specimen collector (22) for insertion within the collector holder tube (14), the specimen collector (22) comprising:
a closure (18) having an insert portion (32) and a cap portion (30);
an O-ring (34) positioned on the insert portion (32) such that the closure (18) is biased towards a non- pivoted alignment when inserted within the collector holder tube (14);
a shaft (28) having a first end coupled to the insert portion (32) and extending therefrom, the shaft (28) terminating at a second end that has a collection swab (24) coupled thereto;
a chamber (42) within the closure (18) configured to hold a radio frequency identification tag therein, wherein the radio frequency identification tag (44) is inserted into the chamber (42), and at least one locking flange (54) extending from the cap portion (30) and configured to engage a locking receiver (40) of the test block; and
a lid (46) configured to sealingly engage the cap portion (30) adjacent the chamber (42), wherein the seal between the lid (46) and the cap portion (30) is permanent.

2. The specimen collection device of claim 1, wherein the locking receiver (40) comprises a sliding lock engagement track (56).

3. The specimen collection device of claim 1, wherein the locking receiver (40) comprises a void configured to secure the at least one locking flange (38) via a frictional fit.

4. The specimen collection device of claim 1, wherein the insert portion (32) of the specimen collector comprises a groove (52) for seating the O-ring (34).

5. The specimen collection device of claim 1, wherein the specimen collector further comprises a co-axial tube (20) containing at least a portion of the shaft (28).

6. The specimen collection device of claim 1, wherein the collector holder tube (14) comprises a narrow channel positioned such that, when the specimen collector is inserted in the collector holder tube (14), the collection swab (24) is contained within the narrow channel.

## Patentansprüche

1. Probenahmevorrichtung, umfassend:
einen Testblock (10), umfassend einen Verriegelungsaufnahmehohlraum (12);
ein Nehmerhalterohr (14) zum Einsetzen in den Verriegelungsaufnahmehohlraum (12) des Testblocks (10); und
einen Probenehmer (22) zum Einsetzen innerhalb des Nehmerhalterohrs (14), der Probenehmer (22) umfassend:
einen Verschluss (18) mit einem Einsatzabschnitt (32) und einem Kappenabschnitt (30);
einen O-Ring (34), der so an dem Einsatzabschnitt (32) positioniert ist, dass der Verschluss (18) in Richtung einer nicht geschwenkten Ausrichtung vorgespannt ist, wenn er innerhalb des Nehmerhalterohrs (14) eingesetzt ist;
einen Schaft (28) mit einem ersten Ende, der mit dem Einsatzabschnitt (32) gekoppelt ist und sich davon erstreckt, wobei der Schaft (28) an einem zweiten Ende endet, der einen Entnahmetupfer (24) aufweist, der damit gekoppelt ist;
eine Kammer (42) innerhalb des Verschlusses (18), die dazu ausgebildet ist, ein Radiofrequenz-Identifikationsetikett darin zu enthalten, wobei das Radiofrequenz-Identifikationsetikett (44) in die Kammer (42) eingesetzt ist, und mindestens einen Verriegelungsflansch (54), der sich von dem Kappenabschnitt (30) erstreckt und dazu ausgebildet ist, in eine Verriegelungsaufnahme (40) des Testblocks einzugreifen; und
einen Deckel (46), der dazu ausgebildet ist, abdichtend mit dem Kappenabschnitt (30), der an die Kammer (42) angrenzt, in Eingriff zu stehen, wobei die Dichtung zwischen dem Deckel (46) und dem Kappenabschnitt (30) dauerhaft ist.

2. Probenahmevorrichtung nach Anspruch 1, wobei die Verriegelungsaufnahme (40) eine Schiebeverriegelungs-Eingriffsschiene (56) umfasst.

3. Probenahmevorrichtung nach Anspruch 1, wobei die Verriegelungsaufnahme (40) einen Hohlraum umfasst, der dazu ausgebildet ist, den mindestens einen Verriegelungsflansch (38) durch einen Reibschluss zu sichern.

4. Probenahmevorrichtung nach Anspruch 1, wobei der Einsatzabschnitt (32) des Probenehmers eine Nut (52) zur Aufnahme des O-Rings (34) umfasst.

5. Probenahmevorrichtung nach Anspruch 1, wobei der Probenehmer ferner ein koaxiales Rohr (20) umfasst, das mindestens einen Abschnitt des Schafts (28) enthält.

6. Probenahmevorrichtung nach Anspruch 1, wobei das Nehmerhalterohr (14) einen engen Kanal umfasst, der so positioniert ist, dass der Entnahmetupfer (24) innerhalb des engen Kanals enthalten ist, wenn der Probenehmer in das Nehmerhalterohr (14) eingesetzt ist.

## Revendications

1. Dispositif de collecte d'échantillon comprenant :
un bloc de test (10) comprenant un vide de récepteur de verrouillage (12) ;
un tube de support de collecteur (14) pour une insertion dans le vide de récepteur de verrouillage (12) du bloc de test (10) ; et
un collecteur d'échantillon (22) pour une insertion à l'intérieur du tube de support de collecteur (14), le collecteur d'échantillon (22) comprenant :
un dispositif d'obturation (18) ayant une partie d'insertion (32) et une partie capuchon (30) ;
un joint torique (34) positionné sur la partie d'insertion (32) de telle sorte que le dispositif d'obturation (18) soit sollicité vers un alignement non pivoté lorsqu'il est inséré à l'intérieur du tube de support de collecteur (14) ;
un arbre (28) ayant une première extrémité couplée à la partie d'insertion (32) et s'étendant à partir de celle-ci, l'arbre (28) se terminant au niveau d'une seconde extrémité qui comporte un écouvillon de collecte (24) couplé à celle-ci ;
une chambre (42) à l'intérieur du dispositif d'obturation (18) configurée pour contenir une étiquette d'identification par radiofréquence en son sein, dans lequel l'étiquette d'identification par radiofréquence (44) est insérée dans la chambre (42), et au moins une bride de verrouillage (54) s'étendant depuis la partie capuchon (30) et configurée pour venir en prise avec un récepteur de verrouillage (40) du bloc de test ; et
un couvercle (46) configuré pour venir en prise de manière étanche avec la partie capuchon (30) adjacente à la chambre (42), dans lequel le joint d'étanchéité entre le couvercle (46) et la partie capuchon (30) est permanent.

2. Dispositif de collecte d'échantillon selon la revendication 1, dans lequel le récepteur de verrouillage (40) comprend un chemin de mise en prise de verrou coulissant (56).

3. Dispositif de collecte d'échantillon selon la revendication 1, dans lequel le récepteur de verrouillage (40) comprend un vide configuré pour fixer la ou les brides de verrouillage (38) par le biais d'un ajustement par frottement.

4. Dispositif de collecte d'échantillon selon la revendication 1, dans lequel la partie d'insertion (32) du collecteur d'échantillon comprend une rainure (52) pour placer le joint torique (34).

5. Dispositif de collecte d'échantillon selon la revendication 1, dans lequel le collecteur d'échantillon comprend en outre un tube coaxial (20) contenant au moins une partie de l'arbre (28).

6. Dispositif de collecte d'échantillon selon la revendication 1, dans lequel le tube de support de collecteur (14) comprend un canal étroit positionné de telle sorte que, lorsque le collecteur d'échantillon est inséré dans le tube de support de collecteur (14), l'écouvillon de collecte (24) soit contenu à l'intérieur du canal étroit.
